# EUROPEAN PATENT APPLICATION

(11) **EP 3 182 759 A1**
(43) Date of publication of application: **21.06.2017**
(21) Application number: 15831936.8
(22) Date of filing: 20.03.2015
(51) Int. Cl.: H04W 36/08

(54) **METHOD AND APPARATUS FOR IMPROVING CELL HANDOVER SPEED, AND STORAGE MEDIUM**

(30) Priority: 13.08.2014 CN 201410397270
(71) Applicant: ZTE Corporation, Shenzhen City, Guangdong Province 518057 (CN)
(72) Inventor: CHENG, Yan, Shenzhen Guangdong 518057 (CN); WANG, Qi, Shenzhen Guangdong 518057 (CN)
(74) Representative: Brevalex
(86) International application number: PCT/CN2015/074756
(87) International publication number: WO 2016/023364

(57) **Abstract**

Disclosed are a method and apparatus for improving a cell handover speed, and a storage medium. The method comprises: determining that a mobile terminal is handed over to a target cell and the handover to the target cell is completed; configuring one or more neighboring cells of the target cell as a preferred neighboring cell or preferred neighboring cells; and acquiring information about the preferred neighboring cell or the preferred neighboring cells, and adding the information about the preferred neighboring cell or the preferred neighboring cells into a system message and sending the system message to the mobile terminal.

## Description

### TECHNICAL FIELD

The disclosure relates to the field of mobile communication, and more particularly to a method and device for increasing a cell handover speed and a storage medium.

### BACKGROUND

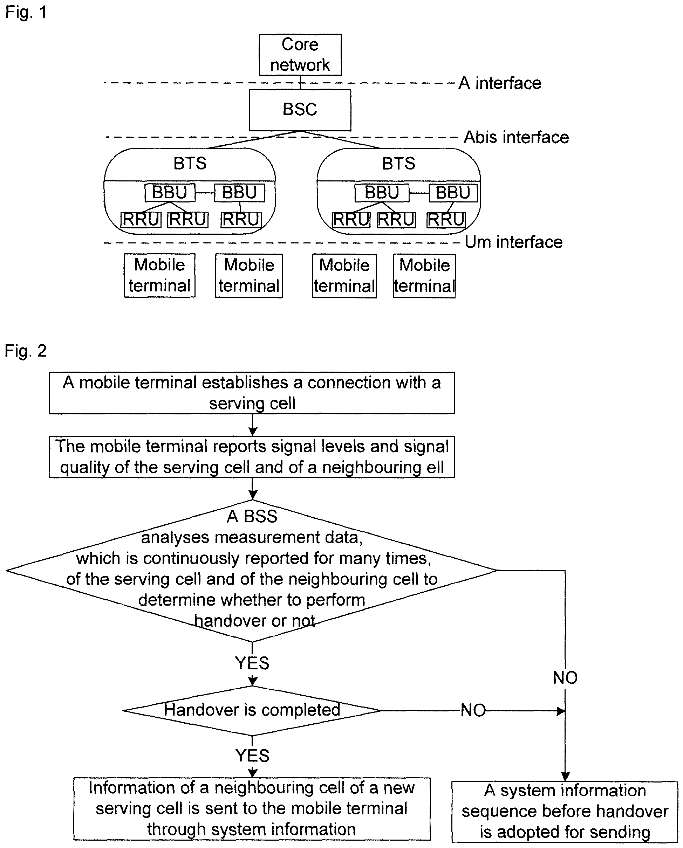

A network architecture of a Global System for Mobile Communication (GSM), as shown in Fig. 1, includes a core network and a Base Station Subsystem (BSS), and the BSS includes a Base Station Controller (BSC) and Base Stations (BTSs). Each BTS consists of BaseBand Units (BBUs) and Remote Units (RUs). An interface between the core network and the BSC is called an A interface, an interface between the BSC and the BTSs is called an Abis interface, and an interface between the BTSs and mobile terminals is called a Um interface. The core network, the BSC and the BTSs collaboratively work to provide a complete mobile voice service function for the mobile terminals.

A GSM divides a service area into multiple cells, and meets a traffic requirement and a mobility requirement by adopting a cellular structure and cell handover. A cell handover function provided by the GSM is that a BSS analyses measurement data, which is continuously reported many times, of a serving cell and neighbouring cells to judge whether to perform handover processing or not by virtue of measurement data, periodically reported by the mobile terminal, of the serving cell and the neighbouring cells and handover processing is triggered if the BSS judges that the comprehensive measurement data of one neighbouring cell is a certain threshold value higher than the serving cell. Measurement of the mobile terminal over the neighbouring cells is implemented by monitoring frequency points of the neighbouring cells.

A 3rd Generation Partnership Project (3GPP) protocol specifies that a BTS sends related configuration data of a serving cell and a neighbouring cell to a mobile terminal through system information. The system information is transmitted to the mobile terminal through a Um interface according to a format and multiframe period defined by the protocol, and is configured into measured frequency point information (such as SYSTEM INFORMATION TYPE 5, 5bis, 5ter and measurement information) of the neighbouring cell and a cell description and the like of the neighbouring cell (such as SYSTEM INFORMATION TYPE 6) for sending to the mobile terminal through a Slow Associated Control Channel (SACCH). In the GSM, a piece of complete system information may be sent by four SACCHs, and each 26-multiframe period has one SACCH. Therefore, the mobile terminal receives two pieces of complete system information at an interval of at least 480ms.

Fig. 2 is a cell handover method according to a conventional art. In the method, a BSS sends system information to a mobile terminal according to a 3GPP protocol. The 3GPP protocol specifies a time, time length and sent content of the system information sent to the mobile terminal by a BTS, but the protocol does not make any constraint to a sequence in which the BSS sends the system information to the mobile terminal. The BSS usually judges cell handover by analysing measurement data, which is continuously obtained many times, of a serving cell and a neighbouring cell to avoid a ping-pong phenomenon of cell handover. The conventional art has a defect: since the protocol does not specify the sending sequence of the system information, in a complicated scenario, for example: a border covered by multiple cells and a scenario where the mobile terminal rapidly moves, poor user experiences, for example: low call level or quality, may be brought after cell handover of the mobile terminal. However, handover may not be performed again due to insufficient measurement data of the neighbouring cell, thereby causing a call drop of a user.

### SUMMARY

In order to solve the existing technical problem, an embodiment of the disclosure provides a method and device for increasing a cell handover speed and a storage medium.

On one aspect, an embodiment of the disclosure provides a method for increasing a cell handover speed, which may include:
handover of a mobile terminal to a target cell is determined, and handover to the target cell is completed;
one or more neighbouring cells of the target cell are configured as preferred neighbouring cells; and
information of the preferred neighbouring cells is acquired, the information of the preferred neighbouring cells is added into system information and the system information is sent to the mobile terminal.

In an embodiment, the operations that the preferred neighbouring cells are configured and the information of the preferred neighbouring cells is added into the system information may include:
an order of priorities of multiple preferred neighbouring cells is configured, and frequency point information of the preferred neighbouring cells is added into the system information according to the order of the priorities, wherein the information of the preferred neighbouring cells may include the frequency point information of the preferred neighbouring cells and location area information of the preferred neighbouring cells.

In an embodiment, when the preferred neighbouring cells include preferred neighbouring cells of a different system, the step that the information of the preferred neighbouring cells is added into the system information and the system information is sent to the mobile terminal may include:
information of the preferred neighbouring cells of the different system is added into first system information and the first system information is sent to the mobile terminal.

In an embodiment, the step that the information of the preferred neighbouring cells is added into the system information and the system information is sent to the mobile terminal may further include:
frequency point information and location area information of intra-system and intra-frequency-band neighbouring cells which are not configured as preferred neighbouring cells and of intra-system and inter-frequency-band neighbouring cells which are not configured as preferred neighbouring cells are acquired, the frequency point information of the intra-system and intra-frequency-band neighbouring cells which are not configured as the preferred neighbouring cells is added into second system information and the second system information is sent to the mobile terminal, the frequency point information of the neighbouring cells which are not configured as the intra-system and inter-frequency-band preferred neighbouring cells is added into third system information and the third system information is sent to the mobile terminal, the location area information of the intra-system and intra-frequency-band neighbouring cells which are not configured as the preferred neighbouring cells and of intra-system and inter-frequency-band neighbouring cells which are not configured as the preferred neighbouring cells is added into fourth system information and the fourth system information is sent to the mobile terminal.

In an embodiment, the step that the information of the preferred neighbouring cells is added into the system information and the system information is sent to the mobile terminal may further include:
if the information of the preferred neighbouring cells of the different system is not completely sent in the first system information, the unsent information of the preferred neighbouring cells of the different system is sent to the mobile terminal in a manner of multiple instances with a same information number;
if the first system information has a vacant space, acquired information of neighbouring cells of the different system which are not configured as preferred neighbouring cells is added into the first system information and the first system information is sent to the mobile terminal.

In an embodiment, when the preferred neighbouring cells include intra-system and inter-frequency-band preferred neighbouring cells, the step that the information of the preferred neighbouring cells is acquired and the information of the preferred neighbouring cells is added into the system information and the system information is sent to the mobile terminal may include:
frequency point information of the intra-system and inter-frequency-band preferred neighbouring cells is added into the third system information and the third system information is sent to the mobile terminal; and the frequency point information and the location area information of the intra-system and intra-frequency-band neighbouring cells which are not configured as the preferred neighbouring cells are acquired, the frequency point information of the intra-system and intra-frequency-band neighbouring cells which are not configured as the preferred neighbouring cells is added into the second system information and the second system information is sent to the mobile terminal, location area information of the intra-system and inter-frequency-band preferred neighbouring cells and of the intra-system and intra-frequency-band neighbouring cells which are not configured as the preferred neighbouring cells is added into fourth system information and the fourth system information is sent to the mobile terminal.

In an embodiment, when the preferred neighbouring cells include intra-system and intra-frequency-band preferred neighbouring cells, the step that the information of the preferred neighbouring cells is acquired and the information of the preferred neighbouring cells is added into the system information and the system information is sent to the mobile terminal may include:
frequency point information of the intra-system and intra-frequency-band preferred neighbouring cells is added into the second system information and the second system information is sent to the mobile terminal; and after sending of the frequency point information of the intra-system and intra-frequency-band preferred neighbouring cells is completed, location area information of the intra-system and intra-frequency-band preferred neighbouring cells is added into fourth system information and the fourth system information is sent to the mobile terminal.

In an embodiment, the method may further include:
if the second system information has a vacant space, the frequency point information of the intra-system and intra-frequency-band neighbouring cells which are not configured as the preferred neighbouring cells is added into the second system information and the second system information is sent to the mobile terminal;
if the frequency point information of the intra-system and intra-frequency-band preferred neighbouring cells is not completely sent in the second system information, the unsent frequency point information of the intra-system and intra-frequency-band preferred neighbouring cells is added into fifth system information and the fifth system information is sent to the mobile terminal.

On another aspect, an embodiment of the disclosure further provides a storage medium having stored therein a set of instructions that, when executed, cause at least one processor to execute the abovementioned operations.

On another aspect, an embodiment of the disclosure further provides a device for increasing a cell handover speed, which may include:
a handover unit arranged to determine handover of a mobile terminal to a target cell, and complete handover to the target cell;
a configuration unit arranged to configure one or more neighbouring cells of the target cell as preferred neighbouring cells; and
a sending unit arranged to acquire information of the preferred neighbouring cells, add the information of the preferred neighbouring cells into system information and send the system information to the mobile terminal.

In an embodiment, the operation that the configuration unit configures the preferred neighbouring cells and the operation that the sending unit adds the information of the preferred neighbouring cells into the system information may include:
the configuration unit configures an order of priorities of multiple preferred neighbouring cells, and the sending unit adds frequency point information of the preferred neighbouring cells into the system information according to the order of the priorities, herein the information of the preferred neighbouring cells may include the frequency point information of the preferred neighbouring cells and location area information of the preferred neighbouring cells.

In an embodiment, when the preferred neighbouring cells include preferred neighbouring cells of a different system,
the operation that the sending unit adds the information of the preferred neighbouring cells into the system information and sends the system information to the mobile terminal may include:
information of the preferred neighbouring cells of the different system is added into first system information and the first system information is sent to the mobile terminal; and
frequency point information and location area information of intra-system and intra-frequency-band neighbouring cells and of intra-system and inter-frequency-band neighbouring cells which are not configured as preferred neighbouring cells are acquired, the frequency point information of the intra-system and intra-frequency-band neighbouring cells which are not configured as the preferred neighbouring cells is added into second system information and the second system information is sent to the mobile terminal, the frequency point information of the neighbouring cells which are not configured as the intra-system and inter-frequency-band preferred neighbouring cells is added into third system information and the third system information is sent to the mobile terminal, and the location area information of the intra-system and intra-frequency-band neighbouring cells which are not configured as the preferred neighbouring cells and intra-system and inter-frequency-band neighbouring cells which are not configured as the preferred neighbouring cells is added into fourth system information and the fourth system information is sent to the mobile terminal.

In an embodiment, the sending unit may further be arranged to, when determining that the information of the preferred neighbouring cells of the different system is not completely sent in the first system information, send the unsent information of the preferred neighbouring cells of the different system to the mobile terminal in a manner of multiple instances with a same information number; and
when determining that the first system information has a vacant space, add, into the first system information, acquired information of neighbouring cells of the different system which are not configured as preferred neighbouring cells and send the first system information to the mobile terminal.

In an embodiment, when the preferred neighbouring cells include intra-system and inter-frequency-band preferred neighbouring cells, the operation that the sending unit acquires the information of the preferred neighbouring cells, adds the information of the preferred neighbouring cells into the system information and sends the system information to the mobile terminal may include:
frequency point information of the intra-system and inter-frequency-band preferred neighbouring cells is added into the third system information and the third system information is sent to the mobile terminal; frequency point information and the location area information of the intra-system and intra-frequency-band neighbouring cells which are not configured as the preferred neighbouring cells are acquired, the acquired frequency point information of the intra-system and intra-frequency-band neighbouring cells which are not configured as the preferred neighbouring cells is added into the second system information and the second system information is sent to the mobile terminal; and location area information of the intra-system and inter-frequency-band preferred neighbouring cells and of the intra-system and intra-frequency-band neighbouring cells which are not configured as the preferred neighbouring cells is added into the fourth system information and the fourth system information is sent to the mobile terminal.

In an embodiment, when the preferred neighbouring cells include intra-system and intra-frequency-band preferred neighbouring cells, the operation that the sending unit acquires the information of the preferred neighbouring cells, adds the information of the preferred neighbouring cells into the system information and sends the system information to the mobile terminal may include:
frequency point information of the intra-system and intra-frequency-band preferred neighbouring cells is added into the second system information and the second system information is sent to the mobile terminal; and after sending of the frequency point information of the intra-system and intra-frequency-band preferred neighbouring cells is completed, location area information of the intra-system and intra-frequency-band preferred neighbouring cells is added into the fourth system information and the fourth system information is sent to the mobile terminal.

In an embodiment, the sending unit may further be arranged to, when determining that the second system information has a vacant space, add, into the second system information, the frequency point information of the intra-system and intra-frequency-band neighbouring cells which are not configured as the preferred neighbouring cells, and send the second system information to the mobile terminal; and
when determining that the frequency point information of the intra-system and intra-frequency-band preferred neighbouring cells is not completely sent in the second system information, add the unsent frequency point information of the intra-system and intra-frequency-band preferred neighbouring cells into fifth system information and send the fifth system information to the mobile terminal.

The embodiment of the disclosure has the following beneficial effects: an optimized system information sending technology is adopted in the embodiment of the disclosure, and on the premise of consistency with a protocol standard, system information arranged to describe a frequency point of a neighbouring cell in a new serving cell is preferably sent after cell handover of the mobile terminal, so that the mobile terminal may rapidly start measuring a level and quality of the neighbouring cell and report them to a BSS as a judgment basis for next handover after being handed over to the new serving cell. The BSS may acquire sampling data at least one message sending period earlier during cell handover judgment, thereby increasing a speed of next cell handover. The embodiment of the disclosure has a better effect for a continuous and rapid handover scenario, and may also be applied to an ordinary handover scenario.

### BRIEF DESCRIPTION OF THE DRAWINGS

Fig. 1 is a diagram of a network architecture of a GSM system according to the conventional art;
Fig. 2 is a flowchart of a cell handover method according to the conventional art;
Fig. 3 is a flowchart of a method for increasing a cell handover speed according to an embodiment of the disclosure;
Fig. 4 is a schematic diagram of a system information sending manner according to embodiment 1 of the disclosure;
Fig. 5 is a schematic diagram of a system information sending manner according to embodiment 2 of the disclosure;
Fig. 6 is a schematic diagram of a system information sending manner according to embodiment 3 of the disclosure;
Fig. 7 is a schematic diagram of a system information sending manner adopted when frequency point information of neighbouring cells of a target cell in a different frequency band and of the same system is preferably sent according to embodiment 3 of the disclosure; and
Fig. 8 is a structure diagram of a device for increasing a cell handover speed according to an embodiment of the disclosure.

### DETAILED DESCRIPTION

The technical solutions in embodiments of the disclosure will be clearly and completely described below with reference to the embodiments and drawings of the disclosure. Obviously, the described embodiments are not all embodiments but only a part of embodiments of the disclosure. It should be understood that the specific embodiments described here are only adopted to explain the disclosure and not intended to limit the disclosure.

A main purpose of the embodiment of the disclosure is to provide a method for increasing a cell handover speed. A core is that the cell handover speed is increased by optimizing a sending sequence of system information under the condition of consistency with a protocol standard, a relatively better effect may be achieved for a communication system with a continuous and rapid handover requirement, and also applicability to ordinary handover is also ensured. In addition, in the embodiment of the disclosure, if neighbouring cells of another communication system (including, but not limited to, 3rd Generation (3G) and 4th Generation (4G)) are configured, the handover speed may also be effectively increased according to a configured order of handover priorities of neighbouring cells. The disclosure will be described below with reference to the drawings and specific embodiments in detail.

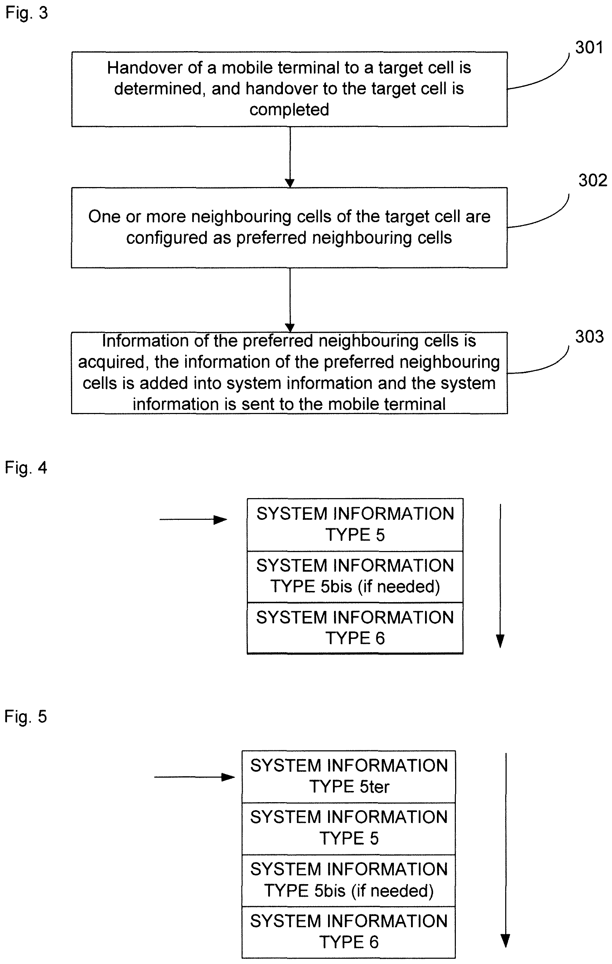

As shown in Fig. 3, the embodiment of the disclosure relates to a method for increasing a cell handover speed, which includes:
S301: handover of a mobile terminal to a target cell is determined, and handover to the target cell is completed;
S302: one or more neighbouring cells of the target cell are configured as preferred neighbouring cells; and
S303: information of the preferred neighbouring cells is acquired, the information of the preferred neighbouring cells is added into system information and the system information is sent to the mobile terminal.

Detailed descriptions will be made below with specific embodiments.

### Embodiment 1

A BSS only configures cells in the same frequency band and of the same system type with a target cell as neighbouring cells of the target cell, and the neighbouring cells of the same system type with the target cell are called intra-system and intra-frequency-band neighbouring cells, herein one or more intra-system and intra-frequency-band neighbouring cells are configured as preferred neighbouring cells, an order of handover priorities is configured for multiple preferred neighbouring cells, the BSS acquires information of the neighbouring cells of the target cell, and the target cell belongs to a GSM system.

Embodiment 1 of the disclosure relates to a method for increasing a handover speed, which includes the following steps.

Step 1: the BSS judges that handover of a mobile terminal to the target cell is required and completes handover to the target cell, the mobile terminal establishes a link with the target cell.

Step 2: the BSS adds frequency point information of the configured preferred neighbouring cells into second system information (SYSTEM INFORMATION TYPE 5) and sends the second system information to the mobile terminal according to the order of the handover priorities.

Preferably, if the second system information has a vacant space, frequency point information of neighbouring cells which are not configured as preferred neighbouring cells may be added into the second system information and the second system information may be sent to the mobile terminal.

Step 3: if the frequency point information of the preferred neighbouring cells is not completely sent in the second system information in Step 2, the unsent frequency point information of the preferred neighbouring cells is added into fifth system information (SYSTEM INFORMATION TYPE 5bis) and the fifth system information is sent to the mobile terminal.

Step 4: after sending the frequency point information of the preferred neighbouring cells is completed, other related information such as location areas of the preferred neighbouring cells is sent to the mobile terminal through fourth system information (SYSTEM INFORMATION TYPE 6), the other related information such as the location areas including location area description identifiers, cell identifiers and some parameters describing cell functions.

Step 5: after sending of the fourth system information is completed, a sending sequence is not required to be regulated for system information sent to the mobile terminal later, and an existing sending manner may be adopted for sending, which will not be elaborated in the embodiment.

A system information sending manner in embodiment 1 of the disclosure is shown in Fig. 4.

### Embodiment 2

A BSS configures cells in the same frequency band and different frequency band and of the same system type with a target cell as neighbouring cells of the target cell, the neighbouring cells in the same frequency band and of the same system type with the target cell are called intra-system and intra-frequency-band neighbouring cells, and the intra-system and inter-frequency-band neighbouring cells type with the target cell are called intra-system and inter-frequency-band neighbouring cells, herein one or more intra-system and inter-frequency-band neighbouring cells are configured as preferred neighbouring cells, an order of handover priorities is configured for the intra-system and inter-frequency-band preferred neighbouring cells, the BSS acquires information of the neighbouring cells of the target cell, and the target cell belongs to a GSM system.

Embodiment 2 of the disclosure relates to a method for increasing a handover speed, which includes the following steps.

Step 1: the BSS judges that handover of a mobile terminal to the target cell is required and completes handover to the target cell, the mobile terminal establishes a link with the target cell.

Step 2: the BSS adds frequency point information of the configured preferred neighbouring cells in the different frequency band into third system information (SYSTEM INFORMATION TYPE 5ter) and sends the third system information to the mobile terminal according to the order of the handover priorities.

Step 3: frequency point information and location area information of intra-system and intra-frequency-band neighbouring cells which are not configured as preferred neighbouring cells are acquired, the BSS adds, into second system information (SYSTEM INFORMATION TYPE 5), frequency information of the target cell's neighbouring cells in the same frequency band which are not configured as preferred neighbouring cells and sends the second system information to the mobile terminal.

Step 4: if the frequency point information of the neighbouring cells, which are not configured as the preferred neighbouring cells in the neighbouring cells in the same frequency band, of the target cell is not completely sent in the second system information, the unsent frequency point information is added into fifth system information (SYSTEM INFORMATION TYPE 5bis) and the fifth system information is sent to the mobile terminal.

Step 5: after sending the frequency point information of the neighbouring cells, which are not configured as the preferred neighbouring cells in the neighbouring cells in the same frequency band, of the target cell is completed, other related information such as location areas of preferred neighbouring cells in the different frequency band and the neighbouring cells, which are not configured as the preferred neighbouring cells in the neighbouring cells in the same frequency band, of the target cell is sent to the mobile terminal through fourth system information (SYSTEM INFORMATION TYPE 6), the other related information such as the location areas including location area description identifiers, cell identifiers and some parameters describing cell functions.

Step 6: after sending of the fourth system information is completed, a sending sequence is not required to be regulated for system information sent to the mobile terminal later, and an existing sending manner may be adopted for sending, which will not be elaborated in the embodiment.

A system information sending manner in embodiment 2 of the disclosure is shown in Fig. 5.

### Embodiment 3

A BSS configures cells of a different system type with a target cell as preferred neighbouring cells, and such neighbouring cells of the different system type with the target cell are called intersystem neighbouring cells. For example, the target cell belongs to a GSM system, and the neighbouring cells of the target cell belong to 3G and 4G systems and the like, herein one or more intersystem neighbouring cells are preferred neighbouring cells. An order of handover priorities is configured for the intersystem preferred neighbouring cells, the BSS acquires information of the neighbouring cells of the target cell, and the target cell belongs to the GSM system.

Embodiment 3 of the disclosure relates to a method for increasing a handover speed, which includes the following steps.

Step 1: the BSS judges that handover of a mobile terminal to the target cell is required, and completes handover to the target cell, and the mobile terminal establishes a link with the target cell.

Step 2: the BSS encapsulates information of the configured intersystem preferred neighbouring cells into first system information (Measurement Information) and sends the first sytem information to the mobile terminal.

Preferably, the first message information into which the information of the configured intersystem preferred neighbouring cells is added has a vacant space, and information of neighbouring cells which are not configured as preferred neighbouring cells in the intersystem neighbouring cells may be added into the first system information and the first system information may be sent to the mobile terminal together.

Step 3: if not being completely sent in the first system information, the information of the configured intersystem preferred neighbouring cells may be sent to the mobile terminal for many times in a manner of multiple instances with s same information number, frequency points of the neighbouring cells and other information of the neighbouring cells being required to e continuously sent and sending of the system information being required to be consistent with a protocol requirement.

Step 4: frequency point information and other related information such as location areas of intra-system and intra-frequency-band neighbouring cells which are not configured as preferred neighbouring cells and of intra-system and inter-frequency-band neighbouring cells which are not configured as preferred neighbouring cells are acquired, and the BSS adds the frequency point information of the intra-system and intra-frequency-band neighbouring cells which are not configured as the preferred neighbouring cells into second system information (SYSTEM INFORMATION TYPE 5), and sends the second system information to the mobile terminal.

Step 5: if the frequency point information of the intra-system and intra-frequency-band neighbouring cells which are not configured as the preferred neighbouring cells in Step 4 is not completely sent, the unsent frequency point information of the intra-system and intra-frequency-band neighbouring cells, which are not configured as the preferred neighbouring cells, of the target cell is added into fifth system information (SYSTEM INFORMATION TYPE 5bis) and the fifth system information is sent to the mobile terminal.

Step 6: the BSS adds the frequency point information of the intra-system and inter-frequency-band neighbouring cells, which are not configured as preferred neighbouring cells, of the target cell into third system information (SYSTEM INFORMATION TYPE 5ter) and sends the third system information to the mobile terminal.

Step 7: after sending of the third system information is completed, the other related information such as the location areas of the intra-system and intra-frequency-band neighbouring cells, which are not configured as the preferred neighbouring cells, of the target cell and of the different frequency band and of the same system is sent to the mobile terminal through fourth system information (SYSTEM INFORMATION TYPE 6), the other related information such as the location areas including location area description identifiers, cell identifiers and some parameters describing cell functions.

Step 8: after sending of the fourth system information is completed, a sending sequence is not required to be regulated for system information sent to the mobile terminal later, and an existing sending manner may be adopted for sending, which will not be elaborated in the embodiment.

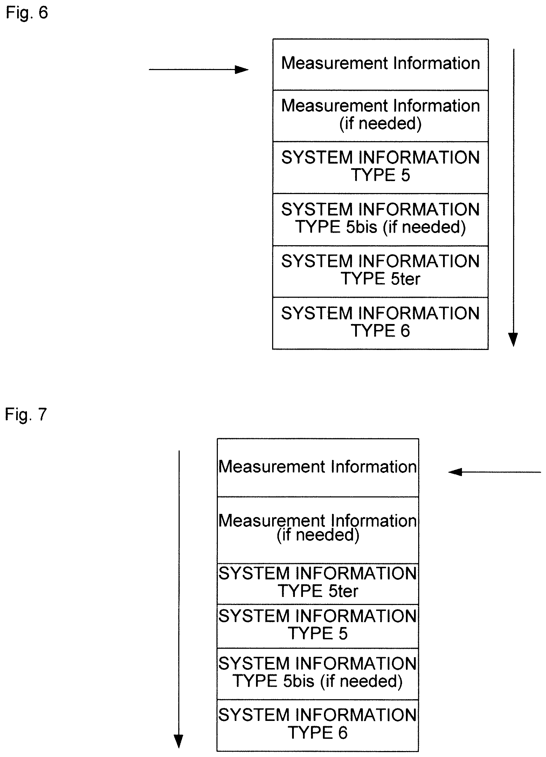

A system information sending manner in embodiment 3 of the disclosure is shown in Fig. 6.

In embodiment 3 of the disclosure, a sending sequence of the frequency point information of the intra-system and intra-frequency-band neighbouring cells which are not configured as the preferred neighbouring cells of the target cell and the intra-system and inter-frequency-band neighbouring cells, which are not configured as the preferred neighbouring cells, of the target cell may be regulated, and a system information sending manner adopted when the frequency point information in the different frequency band is preferably sent is shown in Fig. 7.

The embodiment of the disclosure further provides a storage medium, which includes a set of instructions, the instructions being executed to cause at least one processor to execute the abovementioned operations.

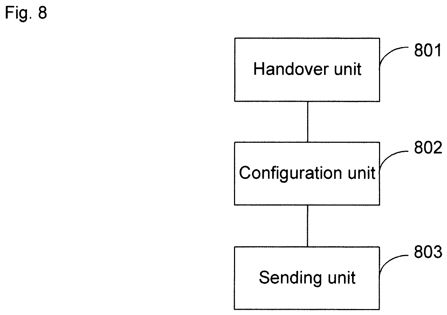

As shown in Fig. 8, the embodiment of the disclosure further relates to a device for increasing a cell handover speed, which includes:
a handover unit 801 arranged to determine that handover of a mobile terminal to a target cell, and complete handover to the target cell;
a configuration unit 802 arranged to configure one or more neighbouring cells of the target cell as preferred neighbouring cells; and
a sending unit 803 arranged to acquire information of the preferred neighbouring cells, add the information of the preferred neighbouring cells into system information and send the system information to the mobile terminal respectively.

The handover unit 801, the configuration unit 802 and the sending unit 803 may all be implemented through a Central Processing Unit (CPU), Digital Signal Processor (DSP) or Field-Programmable Gate Array (FPGA) in the device.

Detailed descriptions will be made below with specific embodiments.

### Embodiment 1

A handover unit is arranged to determine that handover of a mobile terminal to a target cell is required, and complete handover to the target cell;
a configuration unit is arranged to configure one or more neighbouring cells of the target cell as preferred neighbouring cells; and
a sending unit is arranged to acquire information of the preferred neighbouring cells, add the information of the preferred neighbouring cells into system information and send to the mobile terminal respectively.

When the preferred neighbouring cells configured by the configuration unit include preferred neighbouring cells of a different system, the operation that the sending unit adds the information of the preferred neighbouring cells into the system information and sends the system information to the mobile terminal includes that:
information of the preferred neighbouring cells of the different system is added into first system information and the first system information is sent to the mobile terminal; and
frequency point information and location area information of intra-system and intra-frequency-band neighbouring cells which are not configured as preferred neighbouring cells and in a different frequency band and of the same system are acquired, the frequency point information of the intra-system and intra-frequency-band neighbouring cells which are not configured as the preferred neighbouring cells is added into second system information and the second system information is sent to the mobile terminal, the frequency point information of the intra-system and inter-frequency-band neighbouring cells which are not configured as the preferred neighbouring cells is added into third system information and the third system information is sent to the mobile terminal, and the location area information of the intra-system and intra-frequency-band neighbouring cells which are not configured as the preferred neighbouring cells and of intra-system and inter-frequency-band neighbouring cells which are not configured as the preferred neighbouring cells is added into fourth system information and the fourth system information is sent to the mobile terminal.

The sending unit is further arranged to, when determining that the information of the preferred neighbouring cells of the different system is not completely sent in the first system information, send the unsent information of the preferred neighbouring cells of the different system to the mobile terminal in a manner of multiple instances with a same information number; and
when determining that the first system information has a vacant space, add, into the first system information, acquired information of neighbouring cells of the different system which are not configured as preferred neighbouring cells , and send the first system information to the mobile terminal.

The sending unit is further arranged to, when determining that the second system information has a vacant space, add the frequency point information of the intra-system and intra-frequency-band neighbouring cells which are not configured as the preferred neighbouring cells into the second system information and send the second system information to the mobile terminal; and
when determining that the frequency point information of the intra-system and intra-frequency-band preferred neighbouring cells is not completely sent in the second system information, add the unsent frequency point information of the intra-system and intra-frequency-band preferred neighbouring cells into fifth system information and send the fifth system information to the mobile terminal.

### Embodiment 2

A handover unit is arranged to determine that handover of a mobile terminal to a target cell is required, and complete handover to the target cell;
a configuration unit is arranged to configure one or more neighbouring cells of the target cell as preferred neighbouring cells; and
a sending unit is arranged to acquire information of the preferred neighbouring cells, add the information of the preferred neighbouring cells into system information and send the system information to the mobile terminal respectively.

The operation that the configuration unit configures the preferred neighbouring cells and the operation that the sending unit adds the information of the preferred neighbouring cells into the system information include:
the configuration unit configures an order of priorities of multiple preferred neighbouring cells, and the sending unit adds frequency point information of the preferred neighbouring cells into the system information according to the order of the priorities, herein the information of the preferred neighbouring cells includes the frequency point information of the preferred neighbouring cells and location area information of the preferred neighbouring cells.

When the preferred neighbouring cells include preferred neighbouring cells in a different frequency band and of the same system, the operation that the sending unit acquires the information of the preferred neighbouring cells and adds the information of the preferred neighbouring cells into the system information and sends the system information to the mobile terminal includes that:
frequency point information of the intra-system and inter-frequency-band preferred neighbouring cells is added into third system information and the third system information is sent to the mobile terminal; and frequency point information of intra-system and intra-frequency-band neighbouring cells which are not configured as preferred neighbouring cells and location area information of the neighbouring cells are acquired, the frequency point information of the intra-system and intra-frequency-band neighbouring cells which are not configured as the preferred neighbouring cells is added into second system information and the second system information is sent to the mobile terminal, location area information of the intra-system and inter-frequency-band preferred neighbouring cells and the intra-system and intra-frequency-band neighbouring cells which are not configured as the preferred neighbouring cells is added into fourth system information and the fourth system information is sent to the mobile terminal.

The sending unit is further arranged to, when determining that the second system information has a vacant space, add the frequency point information of the intra-system and intra-frequency-band neighbouring cells which are not configured as the preferred neighbouring cells into the second system information and send the second system information to the mobile terminal; and
when determining that the frequency point information of the intra-system and intra-frequency-band preferred neighbouring cells is not completely sent in the second system information, add the unsent frequency point information of the intra-system and intra-frequency-band preferred neighbouring cells into fifth system information and send the fifth system information to the mobile terminal.

### Embodiment 3

A handover unit is arranged to determine that handover of a mobile terminal to a target cell is required, and complete handover to the target cell;
a configuration unit is arranged to configure one or more neighbouring cells of the target cell as preferred neighbouring cells; and
a sending unit is arranged to acquire information of the preferred neighbouring cells, add the information of the preferred neighbouring cells into system information and send the system information to the mobile terminal respectively.

Herein, the operation that the configuration unit configures the preferred neighbouring cells and the operation that the sending unit adds the information of the preferred neighbouring cells into the system information include:
the configuration unit configures an order of priorities of multiple preferred neighbouring cells, and the sending unit adds frequency point information of the preferred neighbouring cells into the system information according to the order of priorities, herein the information of the preferred neighbouring cells includes the frequency point information of the preferred neighbouring cells and location area information of the preferred neighbouring cells.

When the preferred neighbouring cells include intra-system and intra-frequency-band preferred neighbouring cells, the operation that the sending unit acquires the information of the preferred neighbouring cells, adds the information of the preferred neighbouring cells into the system information and sends the system information to the mobile terminal includes that:
frequency point information of the intra-system and intra-frequency-band preferred neighbouring cells is added into second system information and the second system information is sent to the mobile terminal; and after sending of the frequency point information of the intra-system and intra-frequency-band preferred neighbouring cells is completed, location area information of the intra-system and intra-frequency-band preferred neighbouring cells is added into fourth system information and the fourth system information is sent to the mobile terminal.

The sending unit is further arranged to, when determining that the second system information has a vacant space, add frequency point information of intra-system and intra-frequency-band neighbouring cells which are not configured as preferred neighbouring cells into the second system information and send the second system information to the mobile terminal; and
when determining that the frequency point information of the intra-system and intra-frequency-band preferred neighbouring cells is not completely sent in the second system information, add the unsent frequency point information of the intra-system and intra-frequency-band preferred neighbouring cells into fifth system information and send the fifth system information to the mobile terminal.

Those skilled in the art should know that the embodiment of the disclosure may be provided as a method, a system or a computer program product. Therefore, the disclosure may adopt a form of pure hardware embodiment, pure software embodiment and combined software and hardware embodiment. Moreover, the disclosure may adopt a form of computer program product implemented on one or more computer-available storage media (including, but not limited to, a disk memory and an optical memory) including computer-available program codes.

The disclosure is described with reference to flowcharts and/or block diagrams of the method, equipment (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the preferred embodiment of the disclosure and not intended to limit the scope of protection of the disclosure.

## Claims

1. A method for increasing a cell handover speed, comprising:
determining handover of a mobile terminal to a target cell, and completing handover to the target cell;
configuring one or more neighbouring cells of the target cell as preferred neighbouring cells; and
acquiring information of the preferred neighbouring cells, adding the information of the preferred neighbouring cells into system information and sending the system information to the mobile terminal.

2. The method for increasing the cell handover speed according to claim 1, wherein configuring the preferred neighbouring cells and adding the information of the preferred neighbouring cells into the system information comprises:
configuring an order of priorities of multiple preferred neighbouring cells, and adding frequency point information of the preferred neighbouring cells into the system information according to the order of the priorities, wherein the information of the preferred neighbouring cells comprises the frequency point information of the preferred neighbouring cells and location area information of the preferred neighbouring cells.

3. The method for increasing the cell handover speed according to claim 1, wherein when the preferred neighbouring cells comprise preferred neighbouring cells of a different system,
adding the information of the preferred neighbouring cells into the system information and sending the system information to the mobile terminal comprises:
adding information of the preferred neighbouring cells of the different system into first system information and sending the first system information to the mobile terminal.

4. The method for increasing the cell handover speed according to claim 3, wherein adding the information of the preferred neighbouring cells into the system information and sending the system information to the mobile terminal further comprises:
acquiring frequency point information and location area information of intra-system and intra-frequency-band neighbouring cells which are not configured as preferred neighbouring cells and of intra-system and inter-frequency-band neighbouring cells which are not configured as preferred neighbouring cells, adding, into second system information, the frequency point information of the intra-system and intra-frequency-band neighbouring cells which are not configured as the preferred neighbouring cells, and sending the second system information to the mobile terminal;
adding, into third system information, the frequency point information of the intra-system and inter-frequency-band neighbouring cells which are not configured as the preferred neighbouring cells, and sending the third system information to the mobile terminal; and
adding, into fourth system information, the location area information of the intra-system and intra-frequency-band neighbouring cells which are not configured as the preferred neighbouring cells and of the intra-system and inter-frequency-band neighbouring cells which are not configured as preferred neighbouring cells, and sending the fourth system information to the mobile terminal.

5. The method for increasing the cell handover speed according to claim 3, wherein adding the information of the preferred neighbouring cells into the system information and sending the system information to the mobile terminal further comprises:
if the information of the preferred neighbouring cells of the different system is not completely sent in the first system information, sending the unsent information of the preferred neighbouring cells of the different system to the mobile terminal in a manner of multiple instances with a same information number;
if the first system information has a vacant space, adding, into the first system information, acquired information of neighbouring cells of the different system which are not configured as preferred neighbouring cells, and sending the first system information to the mobile terminal.

6. The method for increasing the cell handover speed according to claim 2, wherein when the preferred neighbouring cells comprise preferred neighbouring cells, acquiring the information of the preferred neighbouring cells, adding the information of the preferred neighbouring cells into the system information and sending the system information to the mobile terminal comprises:
adding frequency point information of the intra-system and inter-frequency-band preferred neighbouring cells into the third system information and sending the third system information to the mobile terminal; acquiring the frequency point information and the location area information of the intra-system and intra-frequency-band neighbouring cells which are not configured as the preferred neighbouring cells , adding the frequency point information of the intra-system and intra-frequency-band neighbouring cells which are not configured as the preferred neighbouring cells into the second system information and sending the second system information to the mobile terminal; and adding, into fourth system information, location area information of the intra-system and inter-frequency-band preferred neighbouring cells and of the intra-system and intra-frequency-band neighbouring cells which are not configured as the preferred neighbouring cells , and sending the fourth system information to the mobile terminal.

7. The method for increasing the cell handover speed according to claim 2, wherein, when the preferred neighbouring cells comprise intra-system and intra-frequency-band preferred neighbouring cells, acquiring the information of the preferred neighbouring cells, adding the information of the preferred neighbouring cells into the system information and sending the system information to the mobile terminal comprises:
adding frequency point information of the intra-system and intra-frequency-band preferred neighbouring cells into the second system information and sending the second system information to the mobile terminal; and after sending of the frequency point information of the intra-system and intra-frequency-band preferred neighbouring cells is completed, adding location area information of the intra-system and intra-frequency-band preferred neighbouring cells into fourth system information and sending the fourth system information to the mobile terminal.

8. The method for increasing the cell handover speed according to claim 4, 6 or 7, further comprising:
if the second system information has a vacant space, adding, into the second system information, the frequency point information of the intra-system and intra-frequency-band neighbouring cells which are not configured as the preferred neighbouring cells, and sending the second system information to the mobile terminal;
if the frequency point information of the intra-system and intra-frequency-band preferred neighbouring cells is not completely sent in the second system information, adding the unsent frequency point information of the intra-system and intra-frequency-band preferred neighbouring cells into fifth system information and sending the fifth system information to the mobile terminal.

9. A device for increasing a cell handover speed, comprising:
a handover unit arranged to determine handover of a mobile terminal to a target cell, and complete handover to the target cell;
a configuration unit arranged to configure one or more neighbouring cells of the target cell as preferred neighbouring cells; and
a sending unit arranged to acquire information of the preferred neighbouring cells, add the information of the preferred neighbouring cells into system information and send the system information to the mobile terminal.

10. The device for increasing the cell handover speed according to claim 9, wherein the operation that the configuration unit configures the preferred neighbouring cells and the operation that the sending unit adds the information of the preferred neighbouring cells into the system information comprise:
the configuration unit configures an order of priorities of multiple preferred neighbouring cells, and the sending unit adds frequency point information of the preferred neighbouring cells into the system information according to the order of the priorities,
wherein the information of the preferred neighbouring cells comprises the frequency point information of the preferred neighbouring cells and location area information of the preferred neighbouring cells.

11. The device for increasing the cell handover speed according to claim 9, wherein when the preferred neighbouring cells comprise preferred neighbouring cells of a different system,
the operation that the sending unit adds the information of the preferred neighbouring cells into the system information and sends the system information to the mobile terminal comprises:
information of the preferred neighbouring cells of the different system is added into first system information and the first system information is sent to the mobile terminal; and
frequency point information and location area information of intra-system and intra-frequency-band neighbouring cells which are not configured as preferred neighbouring cells and of intra-system and inter-frequency-band neighbouring cells which are not configured as preferred neighbouring cells is acquired, the frequency point information of the intra-system and intra-frequency-band neighbouring cells which are not configured as the preferred neighbouring cells is added into second system information, and the second system information is sent to the mobile terminal;
the frequency point information of the intra-system and inter-frequency-band neighbouring cells which are not configured as the preferred neighbouring cells is added into third system information, and the third system information is sent to the mobile terminal; and
the location area information of the intra-system and intra-frequency-band neighbouring cells which are not configured as the preferred neighbouring cells and of the intra-system and inter-frequency-band neighbouring cells which are not configured as the preferred neighbouring cells is added into fourth system information and the fourth system information is sent to the mobile terminal.

12. The device for increasing the cell handover speed according to claim 11, wherein
the sending unit is further arranged to, when determining that the information of the preferred neighbouring cells of the different system is not completely sent in the first system information, send the unsent information of the preferred neighbouring cells of the different system to the mobile terminal in a manner of multiple instances with a same information number;
when determining that the first system information has a vacant space, add, into the first system information, acquired information of neighbouring cells of the different system which are not configured as preferred neighbouring cells, and send the first system information to the mobile terminal.

13. The device for increasing the cell handover speed according to claim 10, wherein when the preferred neighbouring cells comprise intra-system and inter-frequency-band preferred neighbouring cells, the operation that the sending unit acquires the information of the preferred neighbouring cells, adds the information of the preferred neighbouring cells into the system information and sends the system information to the mobile terminal comprises:
frequency point information of the intra-system and inter-frequency-band preferred neighbouring cells is added into the third system information and the third system information is sent to the mobile terminal; frequency point information and location area information of the intra-system and intra-frequency-band neighbouring cells which are not configured as the preferred neighbouring cells are acquired, the acquired frequency point information of the intra-system and intra-frequency-band neighbouring cells which are not configured as the preferred neighbouring cells is added into the second system information and the second system information is sent to the mobile terminal; and location area information of the intra-system and inter-frequency-band preferred neighbouring cells and of the intra-system and intra-frequency-band neighbouring cells which are not configured as the preferred neighbouring cells is added into the fourth system information and the fourth system information is sent to the mobile terminal.

14. The device for increasing the cell handover speed according to claim 10, wherein when the preferred neighbouring cells comprise intra-system and intra-frequency-band preferred neighbouring cells, the operation that the sending unit acquires the information of the preferred neighbouring cells, adds the information of the preferred neighbouring cells into the system information and sends the system information to the mobile terminal comprises:
frequency point information of the intra-system and intra-frequency-band preferred neighbouring cells is added into the second system information and the second system information is sent to the mobile terminal; and after sending of the frequency point information of the intra-system and intra-frequency-band preferred neighbouring cells is completed, location area information of the intra-system and intra-frequency-band preferred neighbouring cells is added into the fourth system information and the fourth system information is sent to the mobile terminal.

15. The device for increasing the cell handover speed according to claim 11, 13 or 14, wherein
the sending unit is further arranged to, when determining that the second system information has a vacant space, add, into the second system information, the frequency point information of the intra-system and intra-frequency-band neighbouring cells which are not configured as the preferred neighbouring cells, and send the second system information to the mobile terminal; and
when determining that the frequency point information of the intra-system and intra-frequency-band preferred neighbouring cells is not completely sent in the second system information, add the unsent frequency point information of the intra-system and intra-frequency-band preferred neighbouring cells into fifth system information and send the fifth system information to the mobile terminal.

16. A storage medium having stored therein a set of instructions that, when executed, cause at least one processor to execute the operations in any one of claims 1-8.
